(19) Europäisches Patentamt

European Patent Office

Office européen des brevets

(11) EP 1 703 319 A1

(12) EUROPEAN PATENT APPLICATION
published in accordance with Art. 158(3) EPC

(43) Date of publication:
20.09.2006 Bulletin 2006/38

(51) Int Cl.:
*G03B 21/14* (2006.01)    *G02B 5/30* (2006.01)
*G02B 27/28* (2006.01)    *G02F 1/13* (2006.01)

(21) Application number: 05703665.9

(22) Date of filing: 07.01.2005

(86) International application number:
PCT/JP2005/000426

(87) International publication number:
WO 2005/066710 (21.07.2005 Gazette 2005/29)

(84) Designated Contracting States:
DE FR GB

(30) Priority: 08.01.2004 JP 2004002696

(71) Applicant: Sumitomo Electric Industries, Ltd.
Osaka-shi, Osaka 541-0041 (JP)

(72) Inventors:
• USHIRO, T.,
Itami Works Sumitomo Elec. Ind. Ltd.
Itami-shi,
Hyogo 6640016 (JP)

• OKUBO, S.,
Osaka Works of Sumitomo Elec. Ind. Ltd.
Osaka-shi,
Osaka 5540024 (JP)
• MATSUURA, T.,
Itami Works Sumitomo Elec. Ind. Ltd.
Itami-shi,
Hyogo 6640016 (JP)

(74) Representative: HOFFMANN EITLE
Patent- und Rechtsanwälte
Arabellastrasse 4
81925 München (DE)

(54) **POLARIZATION INTEGRATOR**

(57) A polarization integrator comprises a polarizing beam splitter (PBS) for splitting light from a light source 1 into P-polarized light and S-polarized light, a first micro-lens 52, a ½ wavelength plate 53, and a second micro-lens 54; the first micro-lens is arranged to focus onto mutually differing positions the P-polarized light and S-polarized light split by the PBS; the ½ wavelength plate is arranged in the position in which the P-polarized light is focused, and operates to convert the P-polarized light into S-polarized light; the second micro-lens operates to integrate the S-polarized light after it has passed through the ½-wave plate and been polarization-converted, with S-polarized light which has not passed through the ½-wave plate; and at least any one of the PBS, the first micro-lens, the ½-wave plate, or the second micro-lens is formed using a DLC film.

FIG. 1

## Description

Technical Field

The present invention relates to improvements in polarization integrators for splitting unpolarized light into P-polarized light and S-polarized light, and for converting light of one polarization into light of the other polarization and integrating the light. Such polarization integrators desirably can be used, for example, in liquid crystal projectors.

Background Art

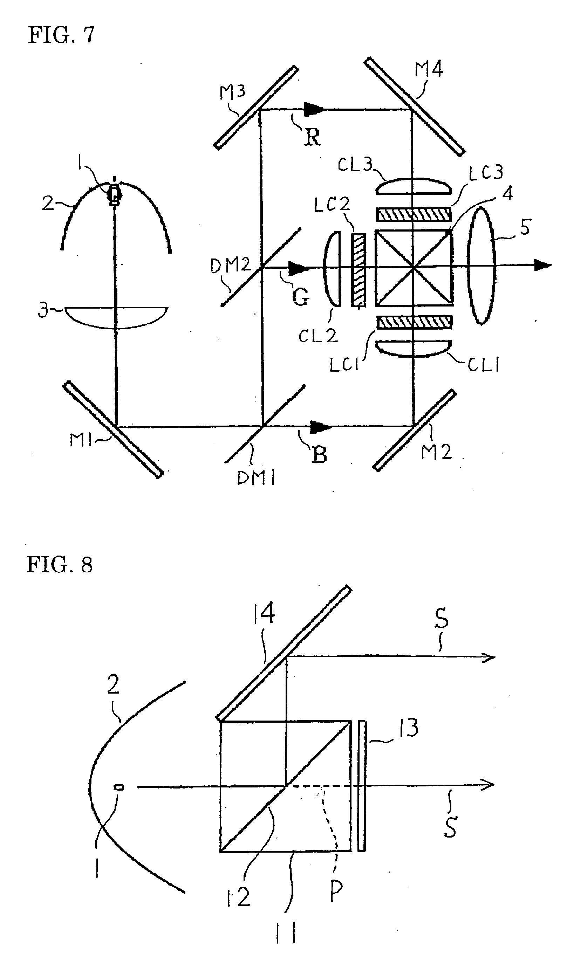

Fig. 7 illustrates, in a schematic block diagram, an example of a conventional liquid crystal projector. The liquid crystal projector includes a light source 1. The light source 1 is disposed within a dome-shaped or parabolic reflecting mirror 2 in order to increase the light utilization efficiency. Rays reflected from the light source 1 are parallelized by a collimator lens 3 and directed toward a first dichroic mirror DM1 by a first fully reflecting mirror M1. The first dichroic mirror DM1 transmits only blue light B, reflecting other colors. Blue light B, having been transmitted through the first dichroic mirror DM1, is focused on a liquid crystal panel LC1 via a second reflecting mirror M2 and a first condensing lens CL1.

Light reflected by the first dichroic mirror DM1 is directed toward a second dichroic mirror DM2. The second dichroic mirror DM2 reflects only green light G, transmitting the remaining red light R. Green light G reflected by the second dichroic mirror DM2 is focused on the liquid crystal panel LC2 by a second condensing lens CL2. Red light R, having been transmitted through the second dichroic mirror, is focused on a third liquid crystal panel LC3 via a third fully reflecting mirror M3, a fourth fully reflecting mirror M4, and a third condensing lens CL3.

The blue light B, green light G, and red light R focused on the first liquid crystal panel LC1, the second liquid crystal panel LC2, and the third liquid crystal panel LC3 are integrated by a prism 4 after being transmitted through the respective corresponding liquid crystal panels. The three primary colors integrated by the prism 4 are then projected by a projection lens 5 onto a (not shown) screen.

As is widely known, a liquid crystal panel includes a plurality of pixels arranged in a matrix, and is capable of transmitting or blocking light by imparting an electrical signal to each pixel. To enable the blockage of light, the liquid crystal layer is sandwiched between two polarizing plates. In particular, light received by the liquid crystal panel is light polarized parallel to a predetermined straight line direction. But light radiated from light sources typically used in liquid crystal projectors is unpolarized light (or randomly polarized light). Therefore the utilization rate for projected light radiated from a light source and being transmitted through a liquid crystal panel is less than ½ of the light from that light source. In recent years, polarization integrators have been used to improve the low light utilization efficiency that results from using unpolarized light sources in liquid crystal projectors.

Fig. 8 is a schematic cross-section depicting the basic principle of a polarization integrator (cf. Nobuo Nishida, "Large Screen Displays," Kyoritsu Publishing, 2002). In this polarization integrator, rays emitted from a light source 1 covered with a dome-shaped reflecting mirror 2 are parallelized by a collimator lens (not shown) and made incident on a polarizing splitting prism 11. The prism 11 includes a PBS (polarizing beam splitter) film 12. The PBS film 12 operates to transmit P-polarized light and reflect S-polarized light from the light source.

The polarizing direction of the P-polarized light transmitted through the PBS film 12 is rotated by a ½-wave plate 13 and converted into S-polarized light. On the other hand, the S-polarized light reflected by the PBS film 12 is reflected by a fully reflecting mirror 14 and made parallel to the S-polarized light transmitted through the ½-wave plate 13. The S-polarized light reflected by the fully reflecting mirror 14 and the S-polarized light transmitted through the ½-wave plate 13 are then integrated by a lens (not shown), and the integrated S-polarized light is made incident on a liquid crystal panel.

It should be noted that in Fig. 8, the ½-wave plate 13 is applied to the P-polarized light transmitted through the PBS film 12, but it will be appreciated that the ½-wave plate 13 conversely may also be applied to the S-polarized light reflected by the PBS film 12. In that case, the light-source beam is split into a P-polarized beam and an S-polarized beam. Once that S-polarized beam is converted into a P-polarized beam, the two P-polarized beams are integrated and made incident on a liquid crystal panel.

Disclosure of Invention

A polarization integrator of the type shown in Fig. 8 includes a polarizing splitting prism 11. A prism of this type is undesirable from the standpoint of reducing the size of a liquid crystal projector. If the prism is fabricated of glass, it will be relatively heavy and difficult to machine. A prism may also be fabricated of a resin, but attendant on enhancement of projector luminosity, the resin's heat tolerance would then become an issue. Moreover, the PBS film requires many tens of layers of polarizing-splitter coatings using dielectric multilayer film, making it high in cost.

In view of these problems with conventional polarization coatings, an object of the present invention is to make available a polarization integrator capable of reduced weight and size, with superior heat resistance, in a simple and low cost form.

A polarization integrator of the present invention includes a polarizing beam splitter for splitting light from a light source into P-polarized light and S-polarized light, a first micro-lens, a ½-wave plate, and a second micro-lens, and is characterized in that: the first micro-lens is arranged so as to focus onto mutually differing positions the P-polarized light and S-polarized light split by the polarizing beam splitter; the ½-wave plate is arranged either in the position in which the P-polarized light or in which the S-polarized light is focused, and operates to convert either the P-polarized light or the S-polarized light into S-polarized light or P-polarized light; the second micro-lens operates to integrate either the S-polarized light or P-polarized light, after it has been transmitted through the ½-wave plate and polarization-converted, with S-polarized light or P-polarized light not having been transmitted through the ½-wave plate; and at least one of the polarizing beam splitter, the first micro-lens, the ½-wave plate, or the second micro-lens is formed utilizing a DLC (diamond-like carbon) film.

At least either the polarizing beam splitter or the ½-wave plate can be formed by a refractive index-modulated diffraction grating formed in a DLC film. At least the first micro-lens or the second micro-lens may be either a refracting lens or a refractive index-modulated diffraction lens, formed in a DLC film. Furthermore, a plurality of groups each being of the polarizing beam splitter, the first micro-lens, the ½-wave plate, and the second micro-lens may be cyclically arrayed within a section of a beam from a light source. This type of polarization integrator preferably may be used in a liquid crystal projector.

Brief Description of Drawings

Fig. 1 is a sectional diagram schematically depicting an example of a polarization integrator according to the present invention.

Fig. 2 is a sectional diagram schematically depicting a method for fabricating the refracting micro-lens array included in the Fig. 1 polarization integrator using a DLC film.

Fig. 3 is a sectional diagram schematically depicting a stamping method which may be utilized as the method for fabricating the Fig. 2 refracting micro-lens.

Fig. 4 is a sectional diagram schematically depicting the DLC film diffracting micro-lens included in the Fig. 1 polarization integrator.

Fig. 5 is a sectional diagram schematically depicting a method for fabricating the Fig. 4 diffracting micro-lens.

Fig. 6 is a sectional diagram schematically depicting the DLC film polarizing beam splitter included in the Fig. 1 polarization integrator.

Fig. 7 is a sectional diagram schematically depicting a conventional liquid crystal projector.

Fig. 8 is a sectional diagram schematically depicting the basic principles of a conventional polarization integrator.

Best Mode for Carrying Out the Invention

First, in the process of making the present invention the inventors confirmed that a refractive index can be increased by making an energy beam incident on a transmissive DLC (diamond-like carbon) film. Such DLC films can be formed using plasma CVD (chemical vapor deposition) on a silicon substrate, a glass substrate, or various other types of substrate. Translucent DLC film thus obtained by plasma CVD normally has a refractive index of approximately 1.55.

An ion beam, electron beam, synchrotron radiation (SR) light, ultraviolet (UV) light, etc. may be used as an energy beam for increasing the refractive index of a DLC film. It is currently confirmed that among these energy beams, irradiation with of He ions permits a maximum change in DLC film refractive index of up to approximately $\Delta n = 0.65$. Irradiation with SR light also currently permits a maximum change in DLC film refractive index up to approximately $\Delta n = 0.50$. Furthermore, a maximum increase in DLC film refractive index of approximately $\Delta n = 0.20$ can be also be achieved using UV irradiation. It will be seen that these amounts of change in refractive index using energy beams to irradiate a DLC film are extraordinarily large compared to the change in refractive index effected by conventional glass ion exchange (a maximum of $\Delta n = 0.17$) or to the change in refractive index caused by UV irradiation of quartz glass (less than approximately $\Delta n = 0.01$)

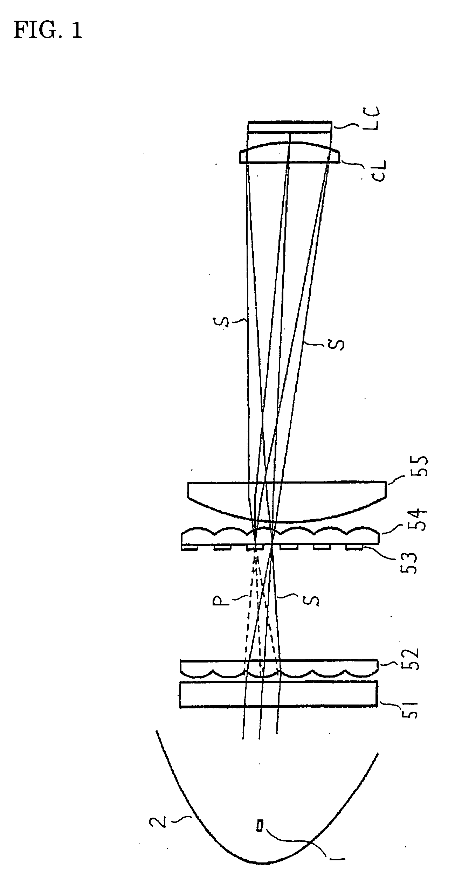

Fig. 1 is a sectional diagram schematically depicting a polarization integrator in an example of an embodiment of the present invention. In this polarization integrator, a light source 1 is disposed within a dome-shaped or parabolic reflecting mirror 2. Light radiated from the light source 1 is parallelized by a collimator lens (not shown), then made incident on a polarizing beam splitter 51. That is to say the polarizing beam splitter 51 splits light from the light source into P-polarized light and S-polarized light. A first micro-lens 52 focuses the P-polarized beam on a ½-wave plate 53, and also focuses the S-polarized beam on the region where the ½-wave plate 53 is not disposed.

The ½-wave plate 53 converts P-polarized light to S-polarized light. S-polarized beam transmitted through the ½-wave plate 53 and the S-polarized beam which has passed through the region where the ½-wave plate 53 is not disposed are integrated by a second micro-lens 54 and a lens 55 and made incident on a liquid crystal panel LC by a collimator lens CL. The polarizing plate included in the liquid crystal panel LC is of course arranged to accept S-polarized light.

In the Fig. 1 example, the ½-wave plate 53 was applied to P-polarized light, but it will be understood that the ½-wave plate 53 may also be applied to S-polarized light. In that case, the light source beam is split into a P-polarized beam and an S-polarized beam by the polarizing beam splitter 51, and after the S-polarized beam is converted to a P-polarized beam by the ½-wave plate 53, the two P-polarized beams are integrated and made incident on the liquid crystal panel LC. Of course the polarizing plate included in the liquid crystal panel LC is arranged to accept P-polarized light.

The utilization rate of light source light in a liquid crystal projector can thus be improved by integrating unpolarized light from a light source into either S-polarized light or P-polarized light using a polarization integrator. In the present invention, at least one of the polarizing beam splitter, the first micro-lens, the ½-wave plate, and the second micro-lens which comprise the polarization integrator is formed using a DLC film. DLC film is of course thin and light and has excellent heat resistance. Therefore enabling at least one of the polarizing beam splitter, the first micro-lens, the ½-wave plate, and the second micro-lens which comprise the polarization integrator to be formed using a DLC film permits a reduction in polarization integrator size, weight, and cost, and by extension, a reduction in the size, weight, and cost of liquid crystal projectors.

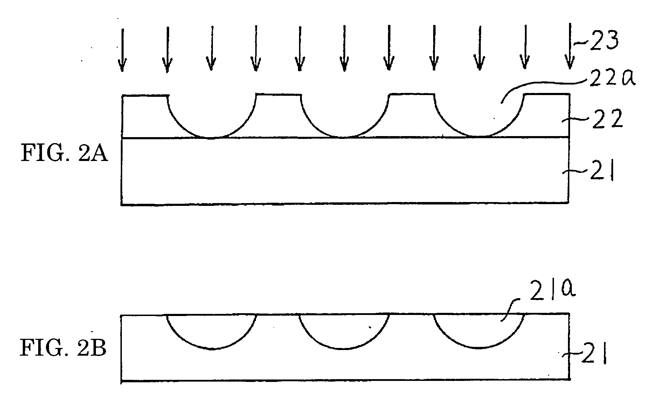

Fig. 2 depicts a schematic sectional diagram of an example of a fabrication method for a refracting micro-lens array according to the present invention. Refracting micro-lens arrays of this type can be used as the first micro-lens 52 or the second micro-lens 54 shown in Fig. 1.

In Fig. 2A, a mask layer 22 is formed on a DLC film 21. Various materials capable of limiting transmission of the energy beam 23 may be used for the mask layer 22; gold may be preferably used. The mask layer 22 has very small concavities 22a, aligned in an array. Each of those concavities 22a has a bottom surface comprising either a portion of an approximately spherical surface or a portion of an approximately cylindrical surface. The energy beam 23 is made incident on the DLC film 21 via the mask layer 22 which includes those concavities 22a.

In Fig. 2B, a micro-lens array 21a is formed in the DLC film 21 by removing the mask layer 22 after irradiation by the energy beam 23. That is, irradiation by the energy beam 23 causes a high refractive index region 21a array to be formed in the DLC film 21 corresponding to the mask layer 22 array of the concavities 22a. At that point, the mask layer concavities 22a have a spherical or cylindrically shaped bottom surface; therefore the thickness of the mask layer increases from the center portion to the perimeter of the concavities 21a. This means, in other words, that the energy beam 23 can more be more easily transmitted through the center portion than through the perimeter of the concavities 22a. Therefore the depth of the high refractive index region 21a has a spherical convex lens or cylindrical convex lens shape, and is deeper at the center portion thereof and shallower at the perimeter. As a result, each of the high refractive index regions 21a can operate as is as single micro-lenses.

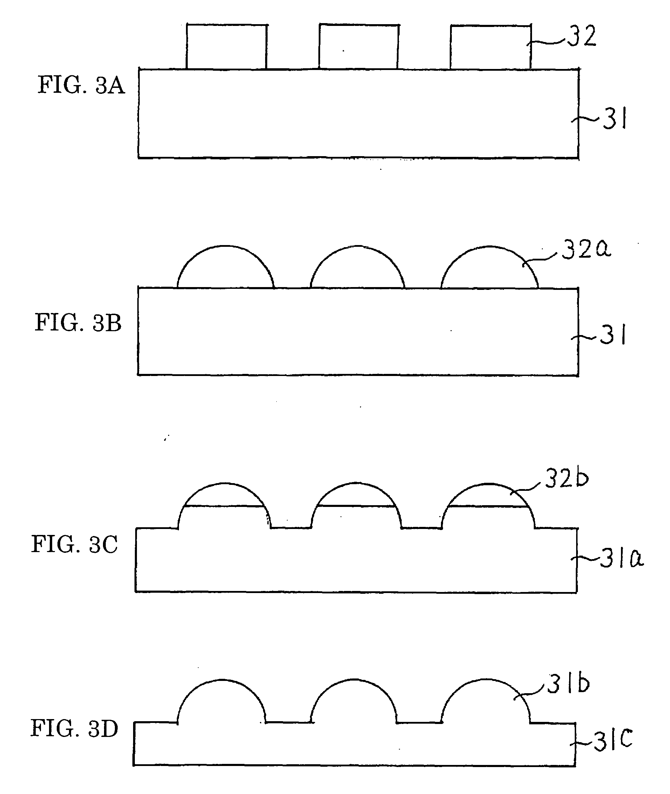

When fabricating a micro-lens array using an energy beam 23 as shown in Fig. 3, adjusting the depth of the spheroid or cylindroid concavities 22a permits adjustment of the thickness of the micro-lens 21a; i.e. the focal length can be adjusted. Even if the depth of the concavities 22a is not adjusted, the micro-lens 21a focal length can be adjusted by varying the transmissivity of the energy beam 23 being made incident. For example, if an He ion beam is used as the energy beam 23, the focal length of the micro-lens array 21a can be shortened by increasing the ion acceleration energy thereof to increase transmissivity. The change $\Delta n$ in the refractive index increases as the energy beam 23 dose increases with respect to the DLC film, so that the focal length of the micro-lens 21a can also be adjusted by adjusting the dose.

A mask comprising approximately spherical or approximately cylindrical concavities 22a as shown in Fig. 2A may be fabricated by various methods. For example, a mask layer 22 of uniform thickness can be formed on a DLC film 21, on top of which is formed a resist layer with tiny arrayed holes or parallel arrays of linear openings. By isotropically etching starting from the tiny holes or linear openings in the resist layer, approximately spherical or approximately cylindrical concavities 22a can be formed within the mask layer 22 under those very small holes.

A mask layer 22 comprising concavities 22a, having approximately spherical or approximately cylindrical bottom surfaces as shown in Fig. 2A, can be easily fabricated using a stamp die capable of fabrication by the method schematically depicted in a section view in Fig. 3.

In Fig. 3A, a resist pattern 32 is formed, for example, on a silica substrate 31. The resist pattern 32 is formed on a plurality of very small circular regions disposed in an array or on a plurality of fine banded regions arrayed in parallel on a substrate 31.

In Fig. 3B, a resist pattern 32 is heated and melted. The resist 32a, having melted on each of the very small circular regions or fine band-shaped regions, takes on an approximately spherical or approximately cylindrical convex lens shape due to its surface tension.

In Fig. 3C, RIE (Reactive Ion Etching) of the silica substrate 31a together with the approximately convex lens-shaped resist 32b causes etching of the silica substrate 31a as the RIE causes the diameter or width of the resist 32b to shrink.

As a result, a silica stamping die 31c, arrayed with approximately spherical or approximately cylindrical convex portions 31b, is ultimately obtained as shown in Fig. 3D. The height of the convex portions 31b can be adjusted by adjusting the relative percentages of the etching speed of the resist 32b and the etching speed of the silica substrate 31a in Fig. 3C.

The stamping die 31c thus obtained may be preferably used to fabricate the mask layer 22 including concavities 22a such as those shown in Fig. 2A. That is, if the mask layer 22 is formed with, for example, a gold material, the excellent ductility of gold means that the concavities 22a can be easily formed by stamping with the stamping die 31c on the gold mask layer 22. Because the stamp die 31c can be used repeatedly once it is fabricated, the concavities 22a can be formed far more easily and inexpensively compared to forming the concavities 22a in the mask layer 22 by etching.

The refracting micro-lens array using DLC film according to the present invention enables a higher refractive index lens to be formed by irradiation with an energy beam compared to conventionally used glass substrates, thus enabling the forming of refractive micro-lens arrays in DLC film, which is far thinner than glass substrates. However, even with a refractive micro-lens using a DLC film, a thinner DLC film is required compared to the diffraction-type micro-lenses described below; a thickness of approximately 10 to 20 $\mu$m is required (as an example of a micro-lens using the diffraction effect, cf. "Ultra Precise Processing and High Volume Manufacturing Technology for Micro Lens (Arrays)," Technical Information Institute Co., Ltd., 2003, pp. 71-81).

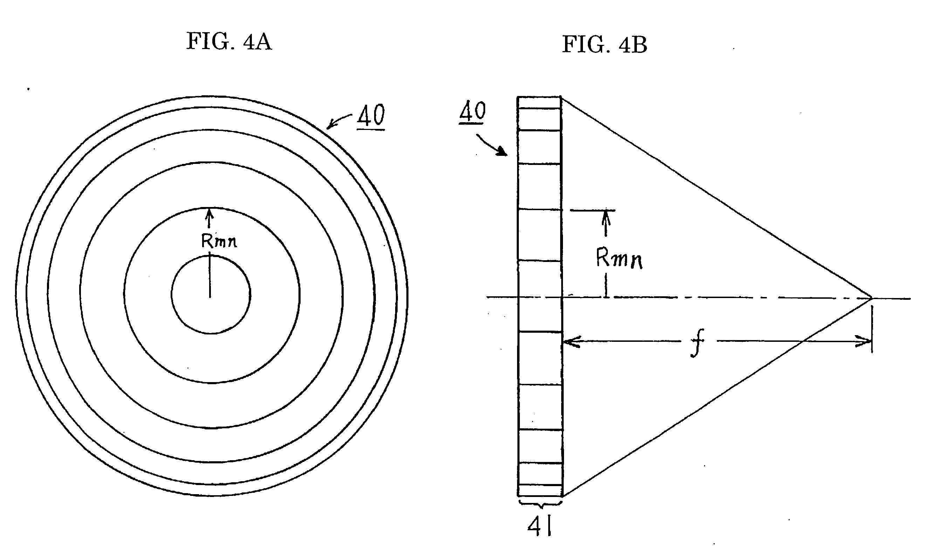

The schematic plan view of Fig. 4A and the schematic sectional view of Fig. 4B depict a diffracting micro-lens according to another embodiment of the present invention. In particular, the refractive index-modulated diffracting micro-lens can be fabricated extraordinarily thinly compared to refracting micro-lenses. Diffracting micro-lenses can be fabricated in a DLC thin film of about 1 to 2 $\mu$m in thickness. That is, the refracting index-modulated diffracting micro-lens 40 is fabricated using a DLC film 41, and includes a plurality of concentric band-shaped ring regions Rmn. Here the term Rmn indicates the $n^{th}$ band-shaped ring region in the $m^{th}$ ring zone, and also indicates the diameter from the center of the concentric circles to the outer perimeter of the band-shaped ring region. The further away the band-shaped ring region Rmn gets from the center of the concentric circles, the more its width will be reduced.

Adjacent band-shaped ring region Rmns have respectively different refraction indexes. The Fig. 4 diffracting micro-lenses, when they are diffraction lenses which include two levels of refractive index modulation, will include up to an m = $3^{rd}$ ring zone, which includes up to an n = $2^{nd}$ band-shaped ring region. Within the same ring zone, the inner band-shaped ring region has a higher refractive index than on the outside.

As may be conjectured from the above, in diffraction lenses having four levels of refractive index modulation, one ring zone includes band-shaped ring regions up to n = $4^{th}$. In this case, as well, the refractive index increases within a given ring zone closer to the center of the concentric circles. That is, four stages of refractive index change are formed from the inner perimeter side to the outer perimeter side of a single ring zone. The cycles of those four stages of change in refractive index are repeated m times for each ring zone.

The outer perimeter radius of the band-shaped ring region Rmn can be established according to Eq. (1) below, based on diffraction theory, including scalar approximation. In Eq. (1), L indicates lens diffraction level, $\lambda$ indicates light wavelength, and f indicates lens focal length. The maximum refractive index change amount $\Delta n$ must be capable of producing a maximum phase modulation amplitude of $\Delta \phi = 2\pi (L - 1)/L$.

## Equation 1

$$\text{Rmn} = \sqrt{\frac{2mnf\lambda}{L} + \left(\frac{mn\lambda}{L}\right)^2} \qquad (1)$$

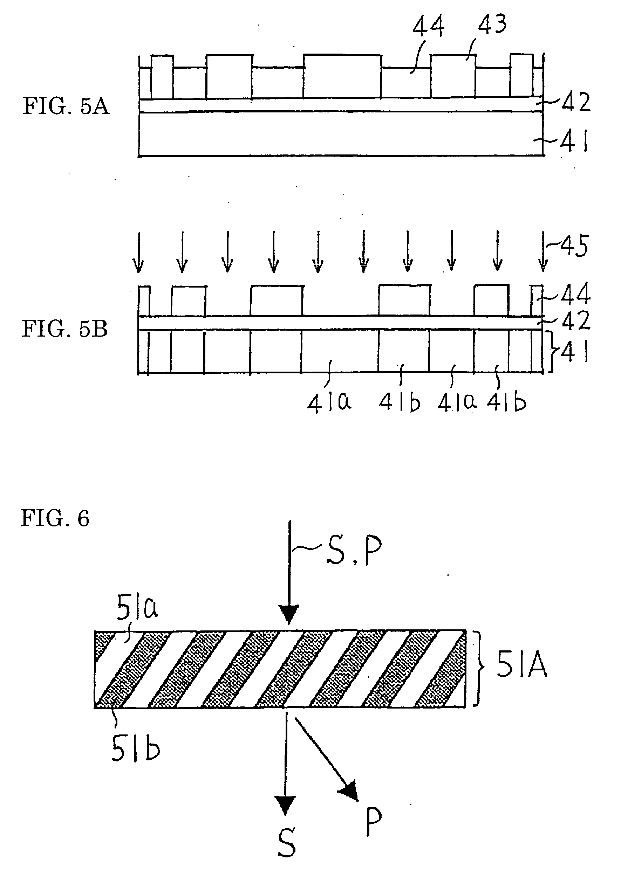

The Fig. 5 schematic sectional diagram depicts an example of a method for fabricating a two-level diffracting micro-lens of the type shown in Fig. 4.

In Fig. 5A, a Ni conductive layer 42, for example, is formed on the DLC film 41 by the EB (electron beam) vapor deposition method. A resist pattern 43 is formed on this conductive layer 42 to cover the band-shaped ring region Rmn (m = 1-3) corresponding to n = 1 in Fig. 4. A gold mask 44 is formed on the opening portion of that resist pattern 43 by electroplating.

In Fig. 5B, the resist pattern 43 is removed, leaving the gold mask 44. The energy beam 45 is made incident on the DLC film 41 through the opening portion in the gold mask 44. That results in an increase in the refractive index of the band-shaped ring region (41a) Rm1 irradiated by the energy beam 45, while the original refractive index of the DLC film is maintained in the band-shaped ring region (41b) Rm2 masked off from the energy beam 45. That is, a two level diffracting micro-lens of the type shown in Fig. 4 is obtained.

In the Fig. 5 example, a mask layer is formed on each DLC film, but needless to say the DLC film can also be irradiated with an energy beam using a separately fabricated independent mask. It will be understood that multiple level diffracting micro-lenses can be obtained by repeated energy beam irradiation of the DLC film using a mask with sequentially adjusted patterns.

Furthermore, by stamping a gold mask layer on a DLC film using a stamping die including concentric band-shaped ring regions of multiple thickness stages, rather than with the type of stamping die shown in Fig. 3D, and irradiating with an energy beam via the stamped gold mask layer, it is also possible to fabricate a multi-level diffracting micro-lens with a single pass of energy beam irradiation.

Moreover, although we explained a diffracting micro-lens corresponding to a diffraction lens cylindrical convex lens in the above embodiment of a diffracting micro-lens, it will be understood that the present invention can also be applied to a diffracting micro-lens corresponding to a refracting-lens cylindrical convex lens. In that case, a plurality of refractive index-adjusted parallel band-shaped regions should be formed in lieu of a plurality of refractive index-adjusted concentric band-shaped ring regions. In that case, the plurality of refractive index-adjusted parallel band-shaped regions of the Fig. 4B sectional diagram, for example, would stretch vertically with respect to the paper plane on which the diagram appears. In that case the gold mask 44 in Fig. 5B should also stretch vertically with respect to the paper plane of the diagram.

Moreover, in the present invention the polarizing beam splitter 51 of Fig. 1 can be fabricated using DLC film. That is, the polarizing beam splitter 51 includes a refractive index-modulated diffraction grating formed in a DLC film. The ability to perform polarization splitting with a diffraction grating is explained in Applied Optics, Vol. 41, 2002, pp. 3558-3566, for example.

Fig. 6 depicts a schematic sectional diagram of a polarizing beam splitter 51A comprising a DLC film with a refractive index modulation diffraction grating. That is, the DLC film 51A includes a relatively low refractive index region 51a and a relatively high refractive index region 51b. The low refractive index region 51a is a region not been irradiated by the energy beam. It has a refractive index, for example, of 1.55. On the other hand, the high refractive index region 51b has been irradiated with SR (synchrotron radiation) light under synchrotron conditions of, for example, 620 (mA/min/mm$^2$), and the refractive index has been raised, for example, to 1.90. The interface between the high refractive index region 51b and the low refractive index region 51a is inclined at 40 degrees, for example, with respect to the DLC film surface.

A polarizing beam splitter 51A of this type may be fabricated as described below. For example, a gold mask having a line and space pattern in which 0.5 μm wide gold stripes are arrayed in a repeated pattern with a cycle of 1 μm can be formed on a DLC film. SR light should then be made incident at a 40 degree angle with respect to the DLC film surface, in a direction perpendicular to the longitudinal direction of the gold stripes.

If light containing S-polarized light and P-polarized light is made incident on a DLC film polarizing beam splitter 51 as depicted in Fig. 6, the S-polarized light will pass through as zero order diffracted light (corresponding to a TE wave), and the P-polarized light will be diffracted as first order diffracted light (corresponding to a TM wave). That is, the P-polarized light and the S-polarized light are split from one another.

In addition, the ½-wave plate in Fig. 1 can also be fabricated using the DLC film of the present invention. That is, the action of the ½-wave plate can be caused to arise using a DLC film which includes a diffraction grating similar to the refractive index modulation diffraction grating depicted in Fig. 6. A ½-wave plate 53 of that type can be fabricated as described below. For example a gold mask having a line and space pattern in which 0.5 μm wide gold stripes are arrayed in a repeated pattern with a cycle of 1 μm can be formed on the DLC film. SR light should thereafter be irradiated in a vertical direction with respect to the DLC film surface. By passing P-polarized light, for example, through a DLC film ½-wave plate 53 which includes a refractive index-modulated diffraction grating obtained as described above, the linear polarized light plane thereof is rotated 90 degrees and converted to S-polarized light. Of course it is also possible to convert S-polarized light to P-polarized light using the ½-wave plate.

Fig. 7 depicts a transmissive liquid crystal projector, but needless to say the polarization integrator of the present invention can also be applied as is to a reflecting-type liquid crystal projector (see *ibid*, "Large Screen Displays).

As discussed above, in the present invention at least one of the polarizing beam splitter, the first micro-lens, the ½-wave plate, and the second micro-lens included in a polarization integrator are formed using a DLC film, thus enabling simpler and lower cost provision of a lighter and more compact polarization integrator.

Industrial Applicability

The polarizing beam splitter of the present invention can be reduced in weight and size and provided more simply and at a lower cost. Such a polarizing beam splitter also enables the weight, size and cost of liquid crystal projectors to be reduced.

**Claims**

1. A polarization integrator including a polarizing beam splitter for splitting light from a light source into P-polarized light and S-polarized light, a first micro-lens, a ½-wave plate, and a second micro-lens, **characterized in that**:

   said first micro-lens is arranged to focus onto mutually differing positions the P-polarized light and S-polarized light split by said polarizing beam splitter;
   said ½-wave plate is arranged either in the position in which the P-polarized light or in which the S-polarized light is focused, and operates to convert either the P-polarized light or the S-polarized light into S-polarized light or P-polarized light;
   said second micro-lens operates to integrate either the S-polarized light or the P-polarized light having passed through said ½-wave plate and been polarization-converted, with either the S-polarized light or P-polarized light not having passed through said ½-wave plate; and
   at least one of said polarizing beam splitter, said first micro-lens, said ½-wave plate, and said second micro-lens is formed using a DLC film.

2. A polarization integrator as set forth in claim 1, **characterized in that** at least one of either said polarizing beam splitter or said ½-wave plate is formed by a refractive index-modulated diffraction grating formed in a DLC film.

3. A polarization integrator as set forth in claims 1 or 2, **characterized in that** at least either said first micro-lens or said second micro-lens is either a refracting lens or a refractive index-modulated diffraction lens, formed in a DLC film.

4. A polarization integrator as set forth in any of claims 1 through 3, **characterized in that** a plurality of groups each being of said polarizing beam splitter, said first micro-lens, said ½-wave plate, and said second micro-lens are arrayed periodically within a sectional plane of the beam from said light source.

5. A liquid crystal projector containing a polarization integrator as set forth in any of claims 1 through 4.

FIG. 1

FIG. 2A

FIG. 2B

FIG. 3A

32

31

FIG. 3B

32a

31

FIG. 3C

32b

31a

FIG. 3D

31b

31c

FIG. 4A

FIG. 4B

$Rmn$

$40$

$40$

$Rmn$

$f$

$41$

EP 1 703 319 A1

FIG. 5A

44  43

42

41

FIG. 5B

45

44

42

41

41a  41b  41a  41b

FIG. 6

S, P

51a

51A

51b

S

P

FIG. 7

FIG. 8

## INTERNATIONAL SEARCH REPORT

| | International application No. |
| --- | --- |
| | PCT/JP2005/000426 |

| A. CLASSIFICATION OF SUBJECT MATTER |
| --- |
| Int.Cl⁷ G03B21/14, G02B5/30, 27/28, G02F1/13 |

According to International Patent Classification (IPC) or to both national classification and IPC

| B. FIELDS SEARCHED |
| --- |
| Minimum documentation searched (classification system followed by classification symbols) |
| Int.Cl⁷ G03B21/14, G02B5/30, 27/28, G02F1/13 |

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 2002-372626 A (Minolta Co., Ltd.),<br>26 December, 2002 (26.12.02),<br>Fig. 7<br>(Family: none) | 1-5 |
| Y | JP 2003-248193 A (Sumitomo Electric Industries, Ltd.),<br>05 September, 2003 (05.09.03),<br>Par. Nos. [0072] to [0086]<br>& US 2003/117706 A1 & EP 1326127 A3<br>& CA 2411904 A | 1-5 |
| Y | JP 2003-90916 A (Seiko Epson Corp.),<br>28 March, 2003 (28.03.03),<br>Fig. 1; Par. No. [0009]<br>(Family: none) | 1,2,4,5 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 April, 2005 (05.04.05) | 26 April, 2005 (26.04.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**EP 1 703 319 A1**

**INTERNATIONAL SEARCH REPORT**

International application No.

PCT/JP2005/000426

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 6-297595 A  (Nitto Denko Corp.),<br>25 October, 1994 (25.10.94),<br>Fig. 2; Par. No. [0014]<br>(Family: none) | 1,2,4,5 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOBUO NISHIDA.** Large Screen Displays. Kyoritsu Publishing, 2002

- Ultra Precise Processing and High Volume Manufacturing Technology for Micro Lens (Arrays. Technical Information Institute Co., Ltd, 2003, 71-81
- *Applied Optics,* 2002, vol. 41, 3558-3566